# EUROPEAN PATENT APPLICATION

(11) **EP 1 073 270 A1**
(43) Date of publication of application: **31.01.2001**
(21) Application number: 99114964.2
(22) Date of filing: 30.07.1999
(51) Int. Cl.: H04N 5/445, H04N 5/45

(54) **Method and apparatus for navigation through multimedia presentations**

(71) Applicant: DEUTSCHE THOMSON-BRANDT GMBH, 78048 Villingen-Schwenningen (DE)
(72) Inventor: Herpel, Carsten, 30171 Hannover (DE)
(74) Representative: Hartnack, Wolfgang, Dipl.-Ing.

(57) **Abstract**

Current multimedia applications assume that the human user can exploit visual information originating from semantically independent sources. This motivates the design of devices providing picture-in-picture information, navigation interfaces, which are known as electronic program guides in the television domain, etc. The use of audio information in such multimedia applications is constrained to making available the audio signal of the main presentation or the audio signal of the currently selected item in a navigation interface. According to the invention a plurality of corresponding audio signals is reproduced, wherein said reproduced audio signals correspond to those multimedia presentations that are currently in the focus of attention of a navigation control device or a user.

## Description

The invention relates to a method and an apparatus for navigation through multimedia presentations, especially to the use of audio signals in addition to visual information in a navigation system for multimedia presentations.

### Prior art

Current multimedia applications assume that the user can exploit visual information originating from semantically independent sources. This motivates the design of devices providing picture-in-picture information, news tickers, stock tickers or banner advertisements alongside a main presentation. Furthermore, navigation interfaces concurrently display a set of representations of multiple multimedia presentations as the basis for the choice of a specific presentation or for the benefit of a user, a so-called "zapper", that wants to concurrently keep track of multiple presentations. These navigation interfaces are known as electronic program guides (EPGs) in the television domain. The navigation through television programs by using an EPG is described e.g. in WO-A-98/56176.

Examples for providing the audio signal of a selected image in a television receiver during multipicture display are disclosed in WO-A-96/13120. In a first embodiment the tuner of the television receiver is tuned to a selected inset image while all other channels are frozen. In a second embodiment a two tuner television receiver uses one tuner for updating the inset images and a second tuner to tune continuously to the selected channel from which the selected inset image is derived. As a result of those applications the audio signal of the selected inset image is reproduced.

### Invention

The invention is based on the object of specifying a method for navigation through multimedia presentations with enhanced user comfort using audio signals. This object is achieved by means of the method specified in claim 1.

It is a further object of the invention to disclose an apparatus, which utilises the inventive method. This object is achieved by the apparatus disclosed in claim 14.

In principle, the method for navigation through multimedia presentations comprising audio and visual signals, wherein concurrently a plurality of multimedia presentations is received and at least one visual signal corresponding to a multimedia presentation is displayed, consists in the fact that a plurality of audio signals is reproduced, wherein said reproduced audio signals correspond to multimedia presentations that are currently in the focus of attention of a navigation interface or a user.

The invention is based upon the realization that the use of audio information in multimedia applications has not to be constrained to making available only the audio signal of the main presentation or the audio signal of the currently selected item in a navigation interface. Instead a plurality of audio signals can be reproduced, which is specifically advantageous for a situation of zapping through multiple multimedia presentations. For example in the case of a football game it will be easier to detect from the audio signal that a goal is about to be scored, so that the user can be alerted to switch to the multimedia presentation of the football match. Similarly, the start of a news broadcast or the appearance of specific key words may catch the users' attention, causing him to switch to that presentation. Such secondary audio information is both useful if the user initially is consuming a single multimedia presentation or if the user is watching a navigation interface having configured one or more audio signals of some presentations to be active.

In an advantageous development at least one visual signal is displayed in a reduced pre-view quality and at least one of said plurality of audio signals is reproduced in a reduced pre-listen quality.

Also, it may be advantageous if the audio and visual signals corresponding to a selected multimedia presentation are presented in their full quality.

In a further advantageous development the associated pre-listen quality audio signal can be activated for a selected menu item by the navigation control device.

Furthermore, it may be advantageous if the virtual position in the room of an activated pre-listen quality audio signal can be selected with the navigation control device.

Also, it may be particularly advantageous if the position of the pre-view quality visual signals on the display screen that are currently in the focus of attention of the navigation control device is used to accordingly adjust the virtual position in the room of the associated pre-listen quality audio signals.

In a further advantageous development said navigation control device allows to move one or more of said pre-view quality visual signals on the display screen and to change the virtual position in the room of the associated activated pre-listen quality audio signals accordingly.

Also, it may be advantageous if for the time period that a menu item is selected, the pre-listen quality audio signal for this menu item is activated and positioned in the virtual center position of the room, temporarily muting a pre-listen quality audio signal that has previously been assigned to appear in the virtual center position.

Similarly, it may be advantageous if an active speaker can be selected with the navigation control device and the pre-listen quality audio signal for the currently selected menu item can be assigned to this speaker, wherein said active speaker may be visually indicated on the display screen.

It may be advantageous if pre-listen quality audio signals are generated by the service provider for the multimedia presentations and are transmitted in addition to the multimedia presentations themselves.

In this case it may be particularly advantageous if sets of said pre-listen quality audio signals corresponding to multiple bouquets of multimedia presentations that are transmitted on different physical transmission paths are transmitted redundantly on said transmission paths.

Also, it may be particularly advantageous if a descriptor containing the association between each multimedia presentation and its pre-view video signal and its pre-listen audio signal is generated and transmitted by the service provider.

Finally, it may be advantageous if the pre-listen audio signals are derived in the receiver from the regular audio signals forming part of each of said multimedia presentations.

### Drawings

Exemplary embodiments of the invention are described with reference to the figures. These show in:
- Figure 1: the assignment of an audio signal to a loudspeaker for a PIP presentation (a) and the change of the virtual position in the room of the audio signal for moved PIP display (b);
- Figure 2: a mosaic-structured display of video signals with selection of a first (a) and second (b) loudspeaker for a first and a second menu item and the resulting loudspeaker assignment (c);
- Figure 3: the assignment of audio signals associated to the menu items in the center of the screen as well as to the left and right to corresponding virtual positions in the room;
- Figure 4: a simplified scene description for the example of Figure 3;
- Figure 5: the transmission of audio and video signals as well as the scene description for the example of Figure 3 to the receiver.

### Exemplary embodiments

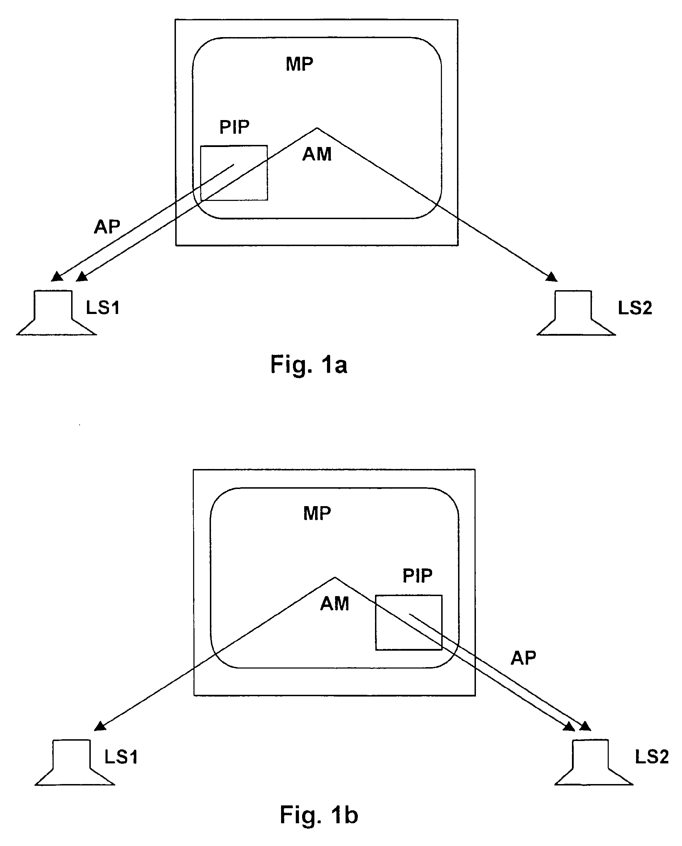

Figure 1 shows a first exemplary embodiment of the invention. The audio signal AM corresponding to the main picture MP is reproduced by the whole loudspeaker configuration, which consists in this embodiment of two loudspeakers LS1, LS2. A picture-in-picture presentation PIP is displayed on the left side of the screen and, therefore, the audio signal AP corresponding to the picture-in-picture presentation PIP is assigned to the left loudspeaker LS1 only (Figure 1a). If, on the other hand, the picture-in-picture presentation PIP is displayed on the right side of the screen, either initially or after moving from the left side by using a navigation control device, the corresponding audio signal AP is assigned to the right loudspeaker LS2 only (Figure 1b). The PIP presentation might be suppressed temporarily as well, while keeping the additional audio signal active.

In case of a navigation interface several video windows are displayed on the screen, wherein each of the video windows is considered as a menu item. A navigation control device, for example a classical remote control, is used to browse the menu and to select a menu item. Selection of menu items can be indicated by visually changing the appearance of the associated video window, e.g. by reducing the brightness, the contrast or the color saturation. Furthermore, additional textual, visual or audible information for a said selected menu item can be obtained through additional buttons on said navigation control device.

Navigation through such a menu can be done either by selecting individual video windows in a static mosaic structure or by scrolling a chain or ring of video windows.

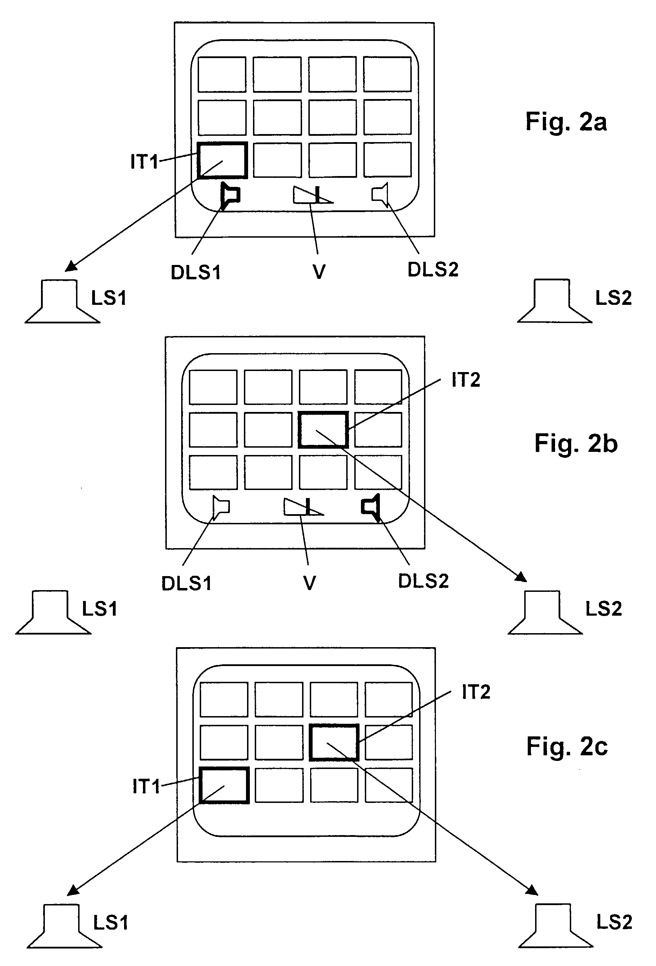

Figure 2 shows a navigation interface with a static mosaic structure of video windows on the display screen. After choosing for a selected menu item whether the associated audio signal shall be activated, the user can select the virtual room position or an active loudspeaker with the navigation control device. In the example of figure 2a the left loudspeaker LS1 is selected for a first selected menu item IT1, wherein said selection is visually indicated by changing a loudspeaker symbol DLS1 on the display screen. Furthermore, the volume of the audio signal can be modified by the navigation control device and can be displayed using a corresponding symbol V on the display screen. For a second selected menu item IT2 the right loudspeaker LS2 is selected. Said selection is indicated by changing the loudspeaker symbol DLS2 (Figure 2b). The resulting loudspeaker assignment for the two menu items IT1, IT2 is shown in figure 2c. Instead of volume configuration of each activated audio signal while the corresponding menu item is selected, it is also possible to configurate the volume for all activated audio signals in common.

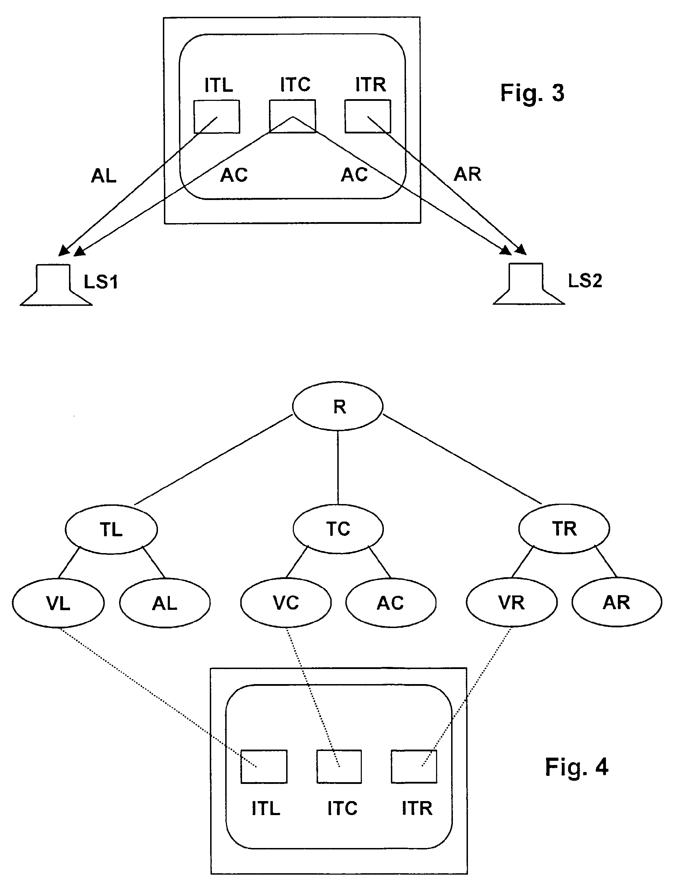

Figure 3 shows navigation through a menu by scrolling a chain of PIP video windows. While scrolling the audio signals associated to the menu items in the center of the screen as well as those to the left and right of it can be made audible in the center as well as on the left and right side of the stereo panorama, respectively. For this purpose, the audio signals AL, AR associated to the left and right menu items ITL, ITR are fed to the left loudspeaker LS1 or right loudspeaker LS2, respectively, and the audio signal AC associated to the center menu items ITC is split and fed to both loudspeakers LS1, LS2. In case of a multi-channel speaker system a virtual room position may be chosen that goes beyond the stereo panorama in front of the user.

The MPEG-4 technology, defining an object-based compression and description of multimedia presentations allows to implement the invention as follows.

In order to display visual signals corresponding to multiple multimedia presentations concurrently, lower resolution and lower quality versions of such presentations, in the following called pre-view quality video signals, can be generated either by a service provider, advantageously using MPEG-4 compression algorithms, or locally in a receiver by extracting some information from each of the full quality multimedia presentations. The first solution puts a burden on the service provider while the latter puts a burden on the receiver. The latter solution is less efficient, since pre-view signals can only be generated from presentations that are transmitted on a given physical transmission path, for example a satellite transponder. A service provider, instead, may generate such pre-view signals from multimedia presentations that are conveyed on multiple physical transmission paths and then redundantly send these signals on each of the physical transmission paths to make them available to every user of the service. Due to the reduced quality and, hence, bitrate of these signals, the penalty of redundancy is limited.

The same methodology can be applied to generate pre-listen quality audio signals by the service provider, advantageously using MPEG-4 compression algorithms, to become available at the navigation interface or application in the receiver. Again, the same limitation holds if the pre-listen quality audio signals are only generated at the receiver, i.e., audio signals belonging to multimedia presentations that are available through different physical transmission paths can in that case not be used by the navigation interface or application.

MPEG-4 addresses the coded representation of audiovisual objects. A so-called scene description describes a format for transmitting the spatio-temporal positioning information that describes how individual audiovisual objects are composed within a scene. Therefore, the MPEG-4 scene description language (BIFS, BInary Format for Scene) can advantageously be used for the description of the relations between each set of transmitted pre-view video, pre-listen audio and the associated main multimedia presentation. This language can also be used by the service provider to convey a default layout of video signals on a display screen, for example in the form of a mosaic, a horizontal or vertical chain of video windows or a ring extending three dimensionally "into" the screen around which the video windows are grouped. BIFS can also store information about the audibility, volume and position of audio signals. Also, a customized positioning and sizing on a display screen for the pre-view signals of said multimedia presentations may be determined by the user, wherein the data defining said customized positioning and sizing on the display screen can be stored in the receiver device.

The information about the current layout of the display and currently active audio signals as well as their virtual room position and volume can be conveniently stored by means of modifying the MPEG-4 scene description with the default layout and status of the navigation interface that has been received from the service provider.

Figure 4 shows a simplified scene description for the example in Figure 3. The information is constructed in a hierarchical manner which can be represented as a tree with a root R. The leaf nodes of the tree are corresponding audio and visual signals AL, VL, AC, VC, AR, VR of the menu items ITL, ITC, ITR. The nodes TL, TC, TR correspond to transform elements for the respective audiovisual objects. Changes of position of the video windows correspond to changes of the parameters in the transform elements TL, TC, TR of the scene graph. Optionally, the user may save such a changed scene description permanently in his receiving device, as a customized version of the navigation interface.

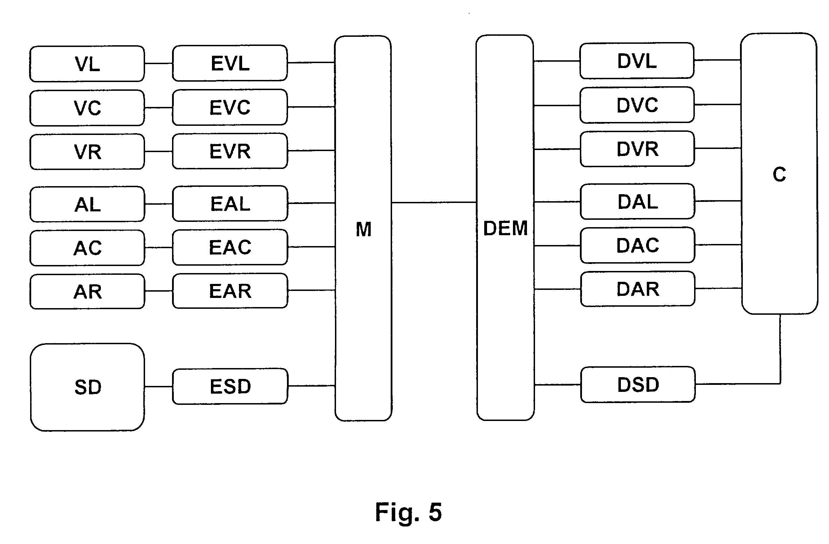

Figure 5 shows how the audio and video signals as well as the scene description for the example in Figure 3 would be conveyed to the receiver. The audio and video signals are encoded by separate encoders EVL, EVC, EVR, EAL, EAC, EAR. As the scene description information SD is a property of the scene's structure, it is encoded by a further encoder ESD and is transmitted as a separate stream. This allows to change the composition of audiovisual objects without having to decode their bitstreams and change their content. The encoded audio, video and scene description bitstreams are multiplexed by an multiplexer M and are conveyed to the receiver. At the receiver side, after demultiplexing by the demultiplexer DEM the separated bitstreams are fed to respective decoders DVL, DVC, DVR, DAL, DAC, DAR, DSD. Finally, the decoded bitstreams are composed by an composer C for playback of the menu items. Although the various encoders and decoders are shown as separate units, several or all of them can also be integrated into single encoder or decoder units, respectively.

The invention can advantageously be used for efficiently exploit audio information in the context of navigation interfaces and for the purpose of consuming multiple multimedia presentations concurrently and applies to any kind of multimedia presentation, e.g. traditional television broadcast in the analog or digital domain, as well as presentations that are conveyed by unicast or multicast transmission in purely digital networks such as the Internet.

The invention can be implemented in any kind of multimedia receiver or playback devices like TV sets, Set Top boxes, Personal computers etc., wherein the audio signals can be reproduced by any kind of reproduction devices like loudspeaker systems consisting of two or more speakers, headphones etc.

## Claims

1. Method for navigation through multimedia presentations comprising audio and visual signals, wherein concurrently a plurality of multimedia presentations is received and at least one visual signal corresponding to a multimedia presentation is displayed, **characterized in that** a plurality of audio signals is reproduced, wherein said reproduced audio signals correspond to multimedia presentations that are currently in the focus of attention of a navigation interface or a user.

2. Method according to claim 1, **wherein** at least one visual signal is displayed in a reduced pre-view quality and at least one of said plurality of audio signals is reproduced in a reduced pre-listen quality.

3. Method according to claim 1 or 2, **wherein** the audio and visual signals corresponding to a selected multimedia presentation are presented in their full quality.

4. Method according to any of the previous claims, **wherein** the associated pre-listen quality audio signal can be activated for a selected menu item by a navigation control device.

5. Method according to claim 4, **wherein** the virtual position in the room of an activated pre-listen quality audio signal can be selected with the navigation control device.

6. Method according to any of the previous claims, **wherein** the position of the pre-view quality visual signals on the display screen that are currently in the focus of attention of the navigation interface is used to accordingly adjust the virtual position in the room of the associated pre-listen quality audio signals.

7. Method according to claim 6, **wherein** said navigation interface allows to move one or more of said pre-view quality visual signals on the display screen and to change the virtual position in the room of the associated activated pre-listen quality audio signals accordingly.

8. Method according to any of the previous claims, **wherein** for the time period that a menu item is selected, the pre-listen quality audio signal for this menu item is activated and positioned in the virtual center position of the room, temporarily muting a pre-listen quality audio signal that has previously been assigned to appear in the virtual center position.

9. Method according to any of the previous claims, **wherein** an active speaker can be selected with the navigation control device and the pre-listen quality audio signal for the currently selected menu item can be assigned to this speaker, wherein said active speaker may be visually indicated on the display screen.

10. Method according to any of the previous claims, **wherein** pre-listen quality audio signals are generated by the service provider for the multimedia presentations and are transmitted in addition to the multimedia presentations themselves.

11. Method according to any of the previous claims, **wherein** sets of said pre-listen quality audio signals corresponding to multiple bouquets of multimedia presentations that are transmitted on different physical transmission paths are transmitted redundantly on said transmission paths.

12. Method according to claim 10 or 11, **wherein** a descriptor containing the association between each multimedia presentation and its pre-view video signal and its pre-listen audio signal is generated and transmitted by the service provider.

13. Method according to any of claims 1 to 9, **wherein** pre-listen audio signals are derived in the receiver from the regular audio signals forming part of each of said multimedia presentations.

14. Apparatus for performing the method according to claim 1.
